(19) Europäisches Patentamt
European Patent Office
Office européen des brevets

(11) **EP 2 446 545 B1**

(12) **EUROPÄISCHE PATENTSCHRIFT**

(45) Veröffentlichungstag und Bekanntmachung des Hinweises auf die Patenterteilung:
**14.05.2014 Patentblatt 2014/20**

(21) Anmeldenummer: **11767367.3**

(22) Anmeldetag: **20.07.2011**

(51) Int Cl.:
*H04B 3/54* (2006.01)    *H04L 12/26* (2006.01)

(86) Internationale Anmeldenummer:
**PCT/DE2011/001477**

(87) Internationale Veröffentlichungsnummer:
**WO 2012/010163 (26.01.2012 Gazette 2012/04)**

(54) **VERFAHREN ZUM BEWERTEN DER NUTZBARKEIT EINES SUBTRÄGERS EINES POWERLINE-SIGNALS**

METHOD FOR ESTIMATING THE USABILITY OF A SUBCARRIER OF A POWERLINE SIGNAL

MÉTHODE D'ESTIMATION DE L'UTILISABILITÉ D'UNE SOUS-PORTEUSE D'UN SIGNAL COURANT PORTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.11.2010 DE 102010051710**
**21.07.2010 DE 102010031863**

(43) Veröffentlichungstag der Anmeldung:
**02.05.2012 Patentblatt 2012/18**

(73) Patentinhaber: **Power Plus Communications AG**
**68167 Mannheim (DE)**

(72) Erfinder:
• **EHRLICH, Hans-Jürgen**
**68199 Mannheim (DE)**

• **RINDCHEN, Markus**
**67574 Osthofen (DE)**

(74) Vertreter: **Ullrich & Naumann**
**Patent- und Rechtsanwälte**
**Schneidmühlstrasse 21**
**69115 Heidelberg (DE)**

(56) Entgegenhaltungen:
**EP-A1- 2 154 789    DE-T2- 60 312 839**

• **ANÄ+-L MENGI ET AL: "Successive impulsive noise suppression in OFDM", POWER LINE COMMUNICATIONS AND ITS APPLICATIONS (ISPLC), 2010 IEEE INTERNATIONAL SYMPOSIUM ON, IEEE, PISCATAWAY, NJ, USA, 28. März 2010 (2010-03-28), Seiten 33-37, XP031686463, ISBN: 978-1-4244-5009-1**

EP 2 446 545 B1

## Beschreibung

Die Erfindung betrifft ein Verfahren zum Bewerten der Nutzbarkeit eines Subträgers eines BPL (Breitband-Powerline)-Signals, insbesondere zur Vermeidung einer gegenseitigen Beeinflussung des BPL-Signals und eines weiteren Signals, wobei das BPL-Signal eine Vielzahl von Subträgern aufweist und in den Subträgern jeweils ein Symbol übertragen werden kann.

Bei einer BPL (Breitband Powerline)-Kommunikation werden Daten über das Stromversorgungsnetzwerk übertragen. BPL kommt insbesondere in Gebäuden zum Einsatz, kann jedoch auch zur Bereitstellung der "letzten Meile", d.h. die Anbindung von Gebäuden an ein Kommunikationsnetz genutzt werden. Die Daten werden in einer Vielzahl von Subträgern (beispielsweise 1536) moduliert. Die Modulationsart wird üblicherweise für jeden Subträger separat abhängig von der Qualität des Subträgers gewählt. Verwendung finden beispielsweise QPSK (Quadrature Phase Shift Keying) oder 16QAM (Quadrature Amplitude Modulation). Die Übertragung erfolgt meist auf Basis von OFDM (Orthogonal Frequency Division Multiplexing). Das BPL-FrequenzSpektrum bewegt sich im Allgemeinen in einem Bereich von 2 MHz bis 30 MHz und überschneidet sich daher mit Nutzfrequenzen verschiedener Funkdienste. Da ein Stromversorgungsnetzwerk gewöhnlich nicht hinsichtlich seines Abstrahlverhaltens optimiert ist, kann eine Kollision zwischen den Diensten und BPL-Anwendungen nicht ausgeschlossen werden.

In der Praxis werden daher bestimmte "schützenswerte" Frequenzbereiche aus dem BPL-Signal ausgeblendet (Notching), um Kollisionen zu vermeiden und eine Koexistenz von BPL und Funkdiensten zu gewährleisten. Das Ausblenden der Frequenzbereiche bedeutet praktisch, dass einzelne Subträger des BPL-Signals nicht für die Datenübertragung genutzt werden.

Es kann grundsätzlich zwischen statischem und dynamischem Notching unterschieden werden. Beim statischen Notching wird ein Frequenzbereich permanent ausgeblendet, um besonders sensitive bzw. sicherheitsrelevante Dienste zu schützen. Mit statischem Notching werden beispielsweise Amateurfunkfrequenzen aus dem BPL-Signal ausgeblendet. Beim dynamischen Notching wird ein Frequenzbereich nur dann ausgeblendet, wenn tatsächlich ein Nutzsignal des Funkdienstes vorliegt. Dynamisches Notching wird derzeit nur für die Frequenzen des Kurzwellenrundfunks diskutiert, da hier die Ausbreitung des Dienstes verschiedenen physikalischen Phänomenen unterliegt, die schwer vorherzusagen sind. Gegenüber dem statischen Notching von Rundfunksendern, kann dynamisches Notching in diesem Umfeld das nutzbare BPL-Frequenzspektrum um ca. 20% erhöhen.

Eine technische Herausforderung liegt in der Detektion eines "schützenswerten" Kurzwellensignals, das die notwendige Empfangsfeldstärke für einen handelsüblichen Empfänger aufweist. Ein mögliches Konzept zur Detektion solcher Signale ist in der DE 603 12 839 T2 beschrieben. Vor Start einer PLC (PowerLine Communication)-Aktivität wird das vollständige, durch das PLC-System potentiell genutzte Frequenzspektrum gescannt und vorhandene Funkquellen detektiert. Alternativ oder zusätzlich ist beschrieben, dass Lücken im Zeitrahmen oder im Frequenzband zur Detektion von Funksendern genutzt werden. Unter Lücken im Zeitrahmen sind Zeiten ohne PLC-Aktivität zu verstehen; Lücken im Frequenzband sind für die PLC-Kommunikation nicht genutzte Frequenzbereiche. Zur weiteren Verbesserung der Ermittlungsmechanismen sind zusätzlich spezielle Korrelationsverfahren beschrieben.

Nachteilig an dem in der DE 603 12 839 T2 beschriebenen Verfahren ist, dass für das Anwenden des Verfahrens keine PLC-Aktivität vorhanden sein darf. Dies führt dazu, dass das gesamte PLC-System oder bestenfalls einzelne Subträger des PCL-Systems für die Detektion abgeschaltet oder deaktiviert sein muss. Ändert sich ein Nutzsignal im laufenden Betrieb des Systems, so kann hierauf nicht zeitnah eingegangen werden, da erst die nächste Inaktivitätsphase abgewartet oder bewusst herbeigeführt werden muss. Dies kann beispielsweise dann notwendig sein, wenn ein Kurzwellenradiosender in Folge von atmosphärischen Störungen bei der letzten Detektion nur sehr schlecht empfangbar war. Nach den Vorgaben des Standards ETSI TS 102578 muss ein Notch im BPL-Signal innerhalb von 15 Sekunden greifen, nachdem ein kollidierendes Funksystem aktiv geworden ist, d.h. das BPL-Signal darf maximal 15 Sekunden lang das Funksystem stören. Fällt die atmosphärische Störung weg, so muss also innerhalb von 15 Sekunde der störungsfreie Empfang ermöglicht werden.

Der vorliegenden Erfindung liegt daher die Aufgabe zugrunde, ein Verfahren der eingangs genannten Art derart auszugestalten und weiterzubilden, dass eine Bewertung der Nutzbarkeit eines Subträgers eines BPL-Signals auch im laufenden Betrieb des BPL-System möglich ist und gleichzeitig zeitnah und effektiv auf sich ändernde kollidierende Signalquellen reagiert werden kann.

Erfindungsgemäß wird die voranstehende Aufgabe durch die Merkmale des Anspruchs 1 gelöst. Danach umfasst das Verfahren die Schritte: Extrahieren eines Empfangswertes $y[k]$ aus einem Subträger eines empfangenen BPL-Signals, Entzerren des Empfangswertes $y[k]$ unter Verwendung einer geschätzten Übertragungsfunktion $\hat{H}$ des Übertragungskanals, Entscheiden für ein Symbol $\hat{d}[k]$, das in dem Empfangswert $y[k]$ codiert ist, Verzerren des Symbols $\hat{d}[k]$ mit der geschätzten Übertragungsfunktion $\hat{H}$ des Übertragungskanals, Bilden einer Differenz zwischen dem Empfangswert $y[k]$ und dem aufbereitetem Signal $\hat{d}[k] \cdot \hat{H}$ und Entscheiden über die Nutzbarkeit des Subträgers basierend auf der Differenz $y[k] - \hat{d}[k] \cdot \hat{H}$.

In erfindungsgemäßer Weise ist zunächst erkannt worden, dass für eine zuverlässige Beurteilung der Nutzbarkeit eines Subträgers in einem BPL-Signal nicht zwangsläufig auf Inaktivitätsphasen gewartet werden muss und dass diese auch nicht bewusst herbeigeführt werden müssen. Vielmehr kann unter Verwendung einer geeigneten Signalaufbereitung während des laufenden Betriebs des BPL-Systems auf das Vorhandensein eines weiteren Signals in einem Subträger geschlossen werden. Hierzu wird zunächst erfindungsgemäß aus den zu beurteilenden Subträger des BPL-Signals ein Empfangswert $y[k]$ extrahiert. Die Extraktion erfolgt üblicherweise durch eine Demodulation des BPL-Signals. Ist das BPL-Signal beispielsweise mittels OFDM moduliert, so wird der Empfangswert $y[k]$ durch eine OFDM-Demodulation gebildet und stellt einen Abtastwert eines Subträgers des BPL-Signals dar. In dem Empfangswert $y[k]$ ist ein Symbol kodiert, das in den nächsten Schritten extrahiert wird. Hierzu wird zunächst der Empfangswert $y[k]$ entzerrt.

Das in dem Subträger über den Übertragungskanal gesendete Symbol wird bei der Übertragung durch den Übertragungskanal verzerrt. Die Verzerrungen können eine Phasenverschiebung, eine Amplitudenverzerrung und/oder dergleichen umfassen. Mathematisch wird das Verhalten des Übertragungskanals durch seine Übertragungsfunktion H beschrieben. Es wird meist eine Darstellung mittels z-Transformation gewählt, da sich die Systeme auf diese Weise recht einfach beschreiben lassen. Die Übertragungsfunktion H kann bei den meisten praktisch vorkommenden Übertragungskanälen nicht direkt gemessen werden und wird daher durch eine Kanalschätzung geschätzt, d.h. es wird eine Übertragungsfunktion H bestimmt, die der tatsächlichen Übertragungsfunktion $H$ möglichst nahe kommt. Verfahren zur Kanalschätzung sind aus der Praxis bekannt. Die Kanalschätzung liefert also eine geschätzte Übertragungsfunktion $\hat{H}$. Die geschätzte Übertragungsfunktion $\hat{H}$ wird zur Entzerrung des Empfangswertes $y[k]$ verwendet. Dies erfolgt üblicherweise durch Division des Empfangswertes $y[k]$ durch die geschätzte Übertragungsfunktion $\hat{H}$.

Nach der Entzerrung des Empfangswertes wird für ein Symbol $\hat{d}[k]$ entschieden. Dieses Symbol $\hat{d}[k]$ stellt das Symbol dar, das mit der größten Wahrscheinlichkeit durch den Sender gesendet worden ist. Nach der Entscheidung für ein Symbol $\hat{d}[k]$ wird das geschätzte Symbol $\hat{d}[k]$ wieder mit der geschätzten Übertragungsfunktion $\hat{H}$ verzerrt. Dies geschieht üblicherweise durch Multiplikation des Symbols $\hat{d}[k]$ mit der Übertragungsfunktion $\hat{H}$. Im Folgenden wird die Differenz des aufbereiteten Signals $\hat{d}[k]\cdot\hat{H}$ und dem Empfangswert $y[k]$ gebildet. Auf diese Weise wird ein Signal gewonnen, das weitestgehend durch Einstreuungen auf dem Übertragungsweg definiert und weitestgehend unabhängig von dem übertragenen Symbol ist. Zu den Einstreuungen gehören neben Störungen auch weitere Signale, die als Nutzsignale für andere Dienste genutzt werden sollen. Basierend auf dieser Differenz kann entschieden werden, ob der untersuchte Subträger für das BPL-Signal nutzbar ist oder nicht, d.h. in wie weit in dem Subträger Einstreuungen vorhanden sind, die von Nutzsignalen herrühren. Damit ist erfindungsgemäß ein Verfahren geschaffen, das bei Aktivität des BPL-Systems verwendet werden kann. Das erfindungsgemäße Verfahren ist quasi sogar auf eine BPL-Aktivität angewiesen, was in der Praxis häufiger vorkommen wird als eine Inaktivität. Es wird in das BPL-Signal "hineingehört", das von anderen BPL-Modems empfangen wird, und es werden mehrere oder sogar alle Subträger hinsichtlich der Nutzbarkeit der Subträger bewertet. Das Ergebnis der Bewertung kann beim Versenden von Daten über das BPL-System berücksichtigt.

Vorzugsweise erfolgt die Entscheidung über die Nutzbarkeit des Subträgers basierend auf stochastische Überlegungen. Vorzugsweise wird hierbei der Erwartungswert der Differenz $y[k] - \hat{d}[k]\cdot\hat{H}$ (bzw. $\hat{d}[k]\cdot\hat{H} - y[k]$) genutzt. Auf diese Weise kann der Einfluss von zufälligen Störungen beseitigt werden. Zur Vermeidung des Einflusses des Vorzeichens der Differenz $y[k] - \hat{d}[k]\cdot\hat{H}$ wird bei der Bestimmung des Erwarungswertes vorzugsweise das Betragsquadrat der Differenz verwendet:

$$\hat{I} = E\left\{y[k] - \hat{d}[k]\cdot\hat{H}\right\}$$

Zur Erhöhung der Zuverlässigkeit des Erwartungswertes wird vorzugsweise eine höhere Anzahl von Betragsquadraten der Differenz über mehrere Messungen hinweg bestimmt und zur Bestimmung des Erwartungswertes genutzt. Vorzugsweise werden mindestens 100 Messwerte verwendet, in besonders bevorzugter Weise sogar mindestens 1000 Messwerte. Auf diese Weise kann eine hohe Qualität und eine hohe Zuverlässigkeit des Erwartungswerts gewährleistet werden. Da die Empfangswerte mit einer relativ hohen Frequenz bei dem Modem empfangen werden, kann in kurzer Zeit ein sehr zuverlässiger Erwartungswert gebildet werden. Dabei muss nicht jeder Empfangswert Berücksichtigung finden. Es kann vielmehr auch erst nach Abarbeitung der Berechnungen für einen Empfangswert der nächste dann aktuelle Empfangswert für die weitere Berechnung verwendet werden. Ein kontinuierliches Bewerten des Subträgers über alle Empfangswerte ist zwar prinzipiell möglich, üblicherweise jedoch nicht notwendig.

Hinsichtlich einer besonders einfachen Bewertung wird über die Nutzbarkeit des Subträgers mittels eines Schwellwertentscheiders entschieden. Hierzu wird der gebildete Erwartungswert mit einem vorgegebenen Schwellwert verglichen. Der Schwellwert kann auf empirische Weise bestimmt werden. Da der Erwartungswert ein Maß für die Signalleistung des weiteren Signals oder generell einer Störquelle ist, kann der Schwellwert derart gewählt werden, dass die Verwertbarkeit des weiteren Signals durch ein handelsübliches Empfangsgerät für das weitere Signal sichergestellt ist. D.h. wenn beispielsweise das weitere Signal durch ein Kurzwellenradiosignal und das handelsübliche Empfangsgerät durch einen Kurzwellenradioempfänger gebildet ist, sollte der Schwellwert derart gewählt sein, dass ein mit ausreichender Stärke empfangbares Radiosignal durch das Radiogerät verwertbar ist. Bei Überschreiten des Schwellwertes würde der Subträger in dem BPL-Signal ausgelassen werden. Bei Unterschreiten des Schwellwertes würde der Subträger weiter verwendet werden. Auf diese Weise kann sehr einfach und ohne großen Berechnungsaufwand ein Bewertungsmaß gebildet werden.

Zum Gewährleisten einer möglichst geringen Störung von aktiv werdenden weiteren Signalquellen wird die Bewertung des Subträgers vorzugsweise periodisch durchgeführt. Dabei liegt die Periodenlänge vorzugsweise unterhalb von 15 Sekunden. Besonders bevorzugter Weise liegt die Periodenlänge jedoch im niedrigen einstelligen Sekundenbereich, um eine möglichst kurzzeitige Störung der weiteren Signalquellen zu gewährleisten. Im Ergebnis wird dadurch nach Ablauf der Periodenlänge jeweils eine neue Bewertung vorgenommen.

Wird für eine Nutzbarkeit des Subträgers entschieden, kann der Subträger weiter verwendet werden. War der Subträger bisher als nicht-nutzbar bewertet und ergibt die Bewertung nunmehr, dass der Subträger benutzbar ist, wird die Freigabe des Subträgers zunächst zurückgestellt. Erst wenn der Subträger für eine gewisse Zeit als nutzbar bewertet ist, wird die Aktivität auf diesem Subträger wieder aufgenommen. Gemäß ETSI TS 102578 muss diese Zeit 180 Sekunden getragen.

Vorzugsweise erfolgt der Schritt des Entscheidens für ein Symbol mittels eines Signaldecoders und eines Symbolmappers. Dabei wird zunächst das entzerrte Empfangssignal mittels eines Signaldecoders dekodiert. Nach der Dekodierung des entzerrten Empfangswertes wird das dekodierte Symbol mittels des Symbolmappers einem Symbol $\hat{d}[k]$ zugeordnet, das am wahrscheinlichsten gesendet worden ist. So wird beispielsweise bei Modulation unter Verwendung einer QPSK (Quadrature Phase Shift Keying) zunächst der empfangene Symbolwert dekodiert und danach für eine Zuordnung in einem der vier Quadranten und damit die Zuordnung zu einem Symbol entschieden. $\hat{d}[k]$ erhält dann der Wert dieses Symbols.

In einer weiter verbesserten Ausführungsform wird zwischen dem Signaldecoder und dem Symbolmapper eine Fehlerkorrektur durchgeführt. Auf diese Weise können die Einflüsse von zufälligen Störungen auf dem Übertragungskanal reduziert werden. Vorzugsweise erfolgt eine Vorwärtsfehlerkorrektur (FEC - Forward Error Correction). Geeignete Verfahren zur FEC sind aus der Praxis bekannt.

In einer noch weiter verbesserten Ausführungsform wird eine Blockfehlererkennung durchgeführt. Dabei wird ein vollständiger Rahmen des BPL-Signals über alle verwendete Subträger untersucht und der korrekte Empfang des gesamten Rahmens überprüft. Zur weiteren Verbesserung des erfindungsgemäßen Verfahrens werden nur die Rahmen bei der Bewertung verwendet, die korrekt empfangen worden sind. Auf diese Weise kann der Einfluss von breitbandigen Impulsstörern erheblich reduziert oder vollständig eliminiert werden.

Es sei darauf hingewiesen, dass der Einsatz von Fehlererkennungs und -korrekturverfahren zwar zur weiteren Verbesserung beitragen können, dass jedoch zugunsten eines geringeren Berechnungsaufwands auf diese Maßnahme verzichtet werden kann.

In einer bevorzugten Ausführungsform ist das weitere Signal, dessen gegenseitige Beeinflussung mit dem BPL-Signal untersucht werden soll, ein Funksignal. Hier sind insbesondere Radiosignale, insbesondere Kurzwellenradiosignale zu nennen. Andere weitere Signale können Amateurfunksignale umfassen. Es sei darauf hingewiesen, dass prinzipiell alle Signalquellen untersucht werden könnten, die in dem BPL-Frequenzspektrum liegen.

Zur Reduzierung des Rechenaufwands können die zu bewertenden Subträger vorselektiert werden. Hierbei kann eine Liste potentiell zu schützender Frequenzen verfügbar sein, die für die Bewertung der Nutzbarkeit von Subträgern berücksichtigt würde. So könnten beispielsweise sämtliche prinzipiell empfangbaren Kurzwellenradiosender in dieser Liste hinterlegt sein. Nur für den Fall, dass ein weiteres Signal in einem Subträger oder in einem gewissen Bereich um den Subträger herum enthalten sein könnte, würde dann eine Bewertung des Subträgers durchgeführt. Da die relevanten Funkfrequenzen in nahezu jedem Staat der Erde reglementiert sind und somit Listen potentiell zu schützender Frequenzen leicht verfügbar oder erstellbar sind, kann auf einfache Art und Weise der Aufwand entscheidend reduziert werden. Üblicherweise muss damit lediglich ein Bruchteil der genutzten Subträger hinsichtlich ihrer Bewertbarkeit untersucht werden.

Bei einer besonders bevorzugten Verwendung des erfindungsgemäßen Verfahrens würde das Ergebnis der Bewertung zur Bestimmung von Notching-Parametern für ein BPL-Signal verwendet werden. Durch das Notching werden Frequenzen im BPL-Signal gezielt ausgeblendet. Dieses Ausblenden erfolgt üblicherweise unter Verwendung eines Notch-Filters, das digital oder analog ausgeführt sein kann. Ausführungen von Notch-Filtern im Zusammenhang mit BPL-Signalen sind dem Fachmann bekannt. Basierend auf die Bewertung eines Subträgers, die entsprechend des erfindungsgemäßen Verfahrens durchgeführt wird, kann für oder gegen ein Auslassen des Subträgers entschieden werden. Sofern für ein Auslassen eines Subträgers entschieden wird, könnten als Notching-Parameter die Mittelfrequenz des Notch-Filters sowie dessen Bandbreite festgelegt werden. Vorzugsweise wird die Mittelfrequenz des Notch-Filters gleich der Mittelsfrequenz des Subträgers gewählt. Die Bandbreite des Notch-Filters ist vorzugsweise ein Vielfaches von 5 kHz. In besonders bevorzugter Weise wird die Bandbreite zu 10 kHz gewählt.

Bei der Implementierung des erfindungsgemäßen Verfahrens könnten die Berechnungsvorschriften in der Hardware implementiert sein, beispielsweise in einem FPGA (Field Programmable Gate Array) oder einem ASIC (Application Specific Integrated Circuit). Auf diese Weise können die Berechnungen sehr effizient durchgeführt werden. Gleichzeitig können mehrere Berechnungsstränge parallel ausgeführt sein, so dass parallel mehrere Subträger untersucht werden können. Prinzipiell lassen sich sogar sämtliche Subträger parallel bewerten.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung zweier bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen

Fig. 1     ein Blockdiagramm eines ersten Ausführungsbeispiels des erfindungsgemäßen Verfahrens mit Vorwärtsfehlerkorrektur und

Fig. 2     ein Blockdiagramm eines zweiten, vereinfachten Ausführungsbeispiels eines erfindungsgemäßen Verfahrens.

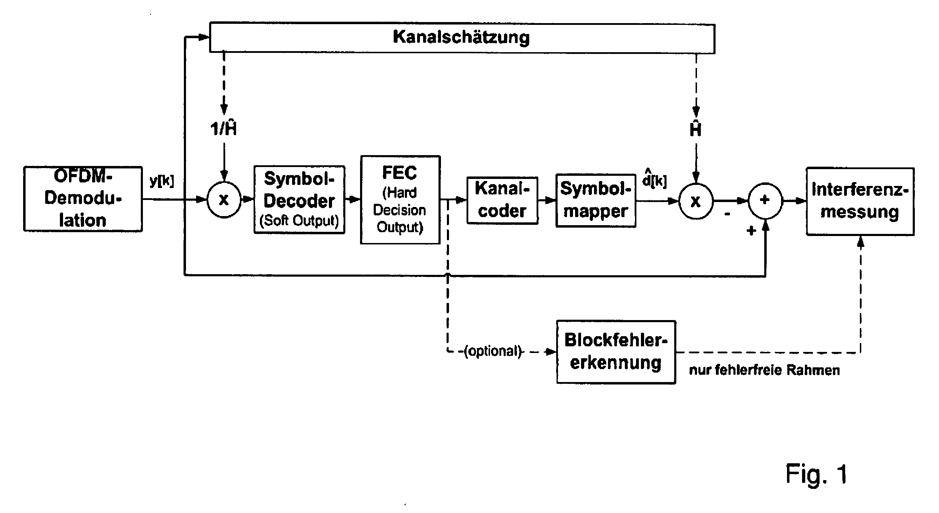

Fig. 1 zeigt ein Blockdiagramm eines ersten Ausführungsbeispiels eines erfindungsgemäßen Verfahrens. In einem ersten Block wird eine OFDM-Demodulation durchgeführt. Dabei wird ein über einen Übertragungskanal zu einem Empfänger übermitteltes BPL-Signal, das mit OFDM moduliert ist, entsprechend demoduliert. Die OFDM-Demodulation liefert eine Reihe von Empfangswerten $y[k]$, die jeweils einen Subträger des BPL-Signals repräsentieren. Fig. 1 stellt eine Aufbereitung eines einzelnen Empfangswertes $y[k]$ in einem Subträger dar. In einem ersten Pfad des Blockdiagramms wird der Empfangswert $y[k]$ einer Kanalschätzung zugeführt, die eine geschätzte Übertragungsfunktion H des Übertragungskanals liefert. Auf einem zweiten Weg wird $y[k]$ mit dem Kehrwert der geschätzten Übertragungsfunktion H multipliziert. Das Ergebnis $y[k]/\hat{H}$ repräsentiert das entzerrte Empfangssignal $y[k]$. Durch die Multiplikation mit der geschätzten Übertragungsfunktion werden die verzerrenden Einflüsse des Übertragungskanals weitestgehend eliminiert. Da es sich lediglich um eine Schätzung der Übertragungsfunktion handelt, ist die Entzerrung fehlerbehaftet, stellt jedoch - je nach Qualität des geschätzten Kanalmodells - eine gute Näherung der tatsächlichen Übertragungsfunktion dar. Geeignete Schätzmodelle zur Durchführung einer Kanalschätzung sind dem Fachmann aus der Praxis bekannt.

Der auf diese Weise entzerrte Empfangswert wird einem Symbol-Decoder zugeführt. Der Symboldecoder liefert einen Punkt in dem Symbolraum, der von den potentiell übertragbaren Symbolen aufgespannt ist. Bei Verwendung einer QPSK ist der Symbolraum eine zweidimensionale Ebene, das Ergebnis des Symboldecoders ein Punkt in einem der Quadranten des Symbolraums. Der durch den Symboldecoder ausgegebene Wert wird einer Vorwärtsfehlerkorrektur FEC zugeführt. Dabei können verschiedenste aus der Praxis bekannte Vorwärtsfehlerkorrekturen vorgenommen werden. Während der Symboldecoder eine "Soft-Decision" liefert, wird durch die Vorwärtsfehlerkorrektur eine "Hard-Decision" vorgenommen. Die auf diese Weise gewonnenen Hard-Decision-Werte werden durch einen Kanaldecoder in Codebits umgesetzt und durch einen nachfolgenden Symbolmapper auf die entsprechenden Symbolwerte umgesetzt. Auf diese Weise entstehen "Interferenzbereinigte" Symbolwerte $\hat{d}[k]$, die am wahrscheinlichsten der gesendeten Symbolfolge $\hat{d}[k]$ entsprechen.

Im Anschluss daran wird das geschätzte Sendesymbol $\hat{d}[k]$ unter Verwendung der geschätzten Übertragungsfunktion H des Übertragungskanals verzerrt. Die Verzerrung erfolgt durch Multiplikation des geschätzten Symbols mit der Übertragungsfunktion $\hat{H}$. Das Ergebnis der Multiplikation wird mit negativen Vorzeichen einer Summierstelle zugeführt, deren zweiter Eingang mit einem dritten Pfad des Blockschaltbildes verbunden ist und direkt den Empfangswert $y[k]$ erhält. Auf diese Weise wird die Differenz zwischen dem tatsächlichen Empfangswert $y[k]$ und dem "bereinigten" Empfangswert $\hat{d}[k]\cdot\hat{H}$ gebildet. Nach Betragsquadratbildung der Differenz $y[k] - \hat{d}[k]\cdot\hat{H}$ wird über eine Vielzahl von Symbolen, d. h. eine Vielzahl von Messungen und Differenzbildungen, ein Erwartungswert $\hat{I}$ gebildet mit

$$\hat{I} = E\{y[k] - \hat{d}[k]\cdot\hat{H}\}$$

Der auf diese Weise gebildete Erwartungswert ist ein Maß für die Einstreuung von weiteren Signalquellen in den Subträger. In der Fig. 1 ist dieser Schritt in dem letzten Block mit der Beschriftung "Interferenzmessung" gekennzeichnet.

Bei der Interferenzmessung kann optional das Ergebnis einer Blockfehlererkennung verwendet werden. Hierzu wird das Signal nach der Vorwärtsfehlerkorrektur FEC abgezweigt und einer Blockerkennung zugeführt. Die Blockerkennung bildet eine Fehlererkennung über den gesamten BPL-Rahmen. Damit kann entschieden werden, ob alle zeitgleich empfangenen Symbole ungestört übertragen worden sind oder zumindest korrigierbar waren. Zur Verbesserung der Interferenzmessung können nur diejenigen Rahmen bei der Bewertung berücksichtigt werden, die fehlerfrei empfangen worden sind.

Das in Fig. 1 dargestellte Blockdiagramm beschreibt die Interferenzmessung für einen Subträger. Der auf diese Weise gewonnene Differenzwert kann einem Schwellwertentscheider zugeführt werden, mittels dessen das Überschreiten eines Grenzwertes beurteilt wird. Wird ein vorgegebener Schwellwert überschritten, so ist die Leistung des Interferenzsignals "zu groß" und es muss ein Notch auf den entsprechenden Subträger gesetzt werden, um das durch den Subträger gestörte Signal nicht weiter zu stören.

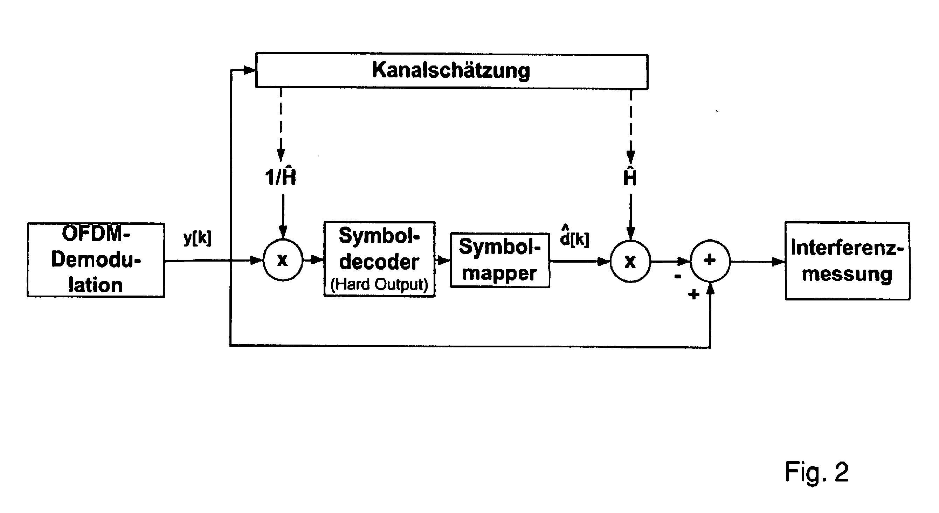

Fig. 2 zeigt ein vereinfachtes Blockschaltbild für die Interferenzmessung. In dem Blockdiagramm nach Fig. 2 sind keine Fehlerkorrekturblöcke enthalten. Auf diese Weise ist der Implementierungsaufwand deutlich geringer, aber es können dennoch vergleichsweise gute Interferenzmessungen durchgeführt werden. Beginnend mit einer OFDM Demodulation wird der Empfangswert $y[k]$ in einem ersten Pfad einer Kanalschätzung zugeführt, die eine geschätzte Übertragungsfunktion $\hat{H}$ liefert. In einem zweiten Zweig wird der Empfangswert $y[k]$ mit dem Kehrwert der geschätzten Übertragungsfunktion H multipliziert und das Ergebnis $y[k]/\hat{H}$ einem Symboldecoder zugeführt, der einen Hard-Decision-Output liefert. Die Ausgabe des Symboldecoders wird einem Symbolmapper zugeführt, der ein geschätztes Symbol $\hat{d}[k]$ liefert, das über ein Multiplikationsglied mit der geschätzten Übertragungsfunktion H multipliziert wird. Das auf diese Weise verzerrte Symbol wird negiert einem Summierglied zugeführt, an dessen zweiten Eingang der dritte Pfad des Blockdiagramms liegt und die Differenz aus verzerrtem Symbol $\hat{d}[k]\cdot H$ und Empfangswert $y[k]$ gebildet wird. Die Differenz wird einer Interferenzmessung zugeführt und dort ein Erwartungswert über das Betragsquadrat der Differenz $y[k] - \hat{d}[k]\cdot\hat{H}$ gebildet. Das Ergebnis wird analog zu Fig. 1 verwendet.

Im Ergebnis wird eine Interferenzleistungsmessung mittels Remodulation durchgeführt und es kann ein Bewertungsmaß für die Nutzbarkeit des jeweiligen Subträgers bestimmt werden.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele des erfindungsgemäßen Verfahrens lediglich zur Erörterung der beanspruchten Lehre dienen, diese jedoch nicht auf die Ausführungsbeispiele einschränken.

**Patentansprüche**

1. Verfahren zum Bewerten der Nutzbarkeit eines Subträgers eines BPL (Breitband-Powerline)-Signals, insbesondere zur Vermeidung einer gegenseitigen Beeinflussung des BPL-Signals und eines weiteren Signals, wobei das BPL-Signal eine Vielzahl von Subträgern aufweist und in den Subträgern jeweils ein Symbol übertragen werden kann, umfassend die Schritte:

   Extrahieren eines Empfangswertes $y[k]$ aus einem Subträger eines empfangenen BPL-Signals,
   Entzerren des Empfangswertes $y[k]$ unter Verwendung einer geschätzten Übertragungsfunktion H des Übertragungskanals,
   Entscheiden für ein Symbol $\hat{d}[k]$, das in dem Empfangswert $y[k]$ codiert ist,
   Verzerren des Symbols $\hat{d}[k]$ mit der geschätzten Übertragungsfunktion $\hat{H}$ des Übertragungskanals,
   Bilden einer Differenz zwischen dem Empfangswert $y[k]$ und dem aufbereitetem Signal $\hat{d}[k]\cdot\hat{H}$ und
   Entscheiden über die Nutzbarkeit des Subträgers basierend auf der Differenz $y[k] - \hat{d}[k]\cdot\hat{H}$.

2. Verfahren nach Anspruch 1, **dadurch gekennzeichnet, dass** über die Nutzbarkeit des Subträgers basierend auf dem Erwartungswert des Betragsquadrats der Differenz $y[k] - \hat{d}[k]\cdot\hat{H}$ entschieden wird, wobei der Erwartungswert über eine Vielzahl von Differenzen, vorzugsweise mindestens 100, besonders bevorzugter Weise mindestens 1000 gebildet wird.

3. Verfahren nach Anspruch 1 oder 2, **dadurch gekennzeichnet, dass** die Entscheidung über die Nutzbarkeit des Subträgers mittels eines Schwellwertentscheiders gebildet wird, wobei bei Unterschreiten eines vorgegebenen Schwellwerts der Subträger genutzt wird und bei Überschreiten des Schwellwerts der Subträger ausgelassen wird.

4. Verfahren nach einem der Ansprüche 1 bis 3, **dadurch gekennzeichnet, dass** die Bewertung des Subträgers periodisch durchgeführt wird, vorzugsweise mit einer Periodendauer von kleiner als 15 s.

5. Verfahren nach einem der Ansprüche 1 bis 4, **dadurch gekennzeichnet, dass** in dem Schritt des Entscheidens für ein Symbol das entzerrte Empfangssignal mittels eines Signaldecoders decodiert wird und das decodierte Symbol mittels eines Symbolmappers einem Symbol $\hat{d}[k]$ zugeordnet wird, das am wahrscheinlichsten gesendet worden ist.

6. Verfahren nach Anspruch 5, **dadurch gekennzeichnet, dass** zwischen Signaldecoder und Symbolmapper eine Fehlerkorrektur, vorzugsweise eine Vorwärtsfehlerkorrektur, durchgeführt wird.

7. Verfahren nach einem der Ansprüche 1 bis 6, **dadurch gekennzeichnet, dass** eine Blockfehlererkennung durchgeführt wird und dass lediglich Rahmen des BPL-Signals in die Bewertung einfließen, die korrekt empfangen worden sind.

**8.** Verfahren nach einem der Ansprüche 1 bis 7, **dadurch gekennzeichnet, dass** das weitere Signal ein Funksignal, insbesondere ein Radiosignal oder ein Amateurfunksignal, umfasst.

**9.** Verfahren nach Anspruch 8, **dadurch gekennzeichnet, dass** die zu bewertenden Subträger anhand einer vorgegebenen Liste potentiell zu schützendes Frequenzen vorselektiert werden.

**10.** Verfahren nach einem der Ansprüche 1 bis 9, **dadurch gekennzeichnet, dass** das Ergebnis der Bewertung zum Bestimmen von Notching-Parametem für ein BPL-Signal verwendet wird, wobei durch das Notching Frequenzen im BPL-Signal ausgeblendet werden, wobei eine Bewertung eines Subträgers durchgeführt wird und wobei basierend auf die Bewertung des Subträgers für oder gegen ein Auslassen des Subträgers entschieden wird.

**11.** Verfahren nach Anspruch 10, **dadurch gekennzeichnet, dass** zum Auslassen des Subträgers ein Notch-Filter verwendet wird, wobei die Mittelfrequenz des Notch-Filters der Mittelfrequenz des Subträgers entspricht und wobei das Notch-Filter vorzugsweise eine Bandbreite eines Vielfaches von 5 kHz, besonders bevorzugter Weise eine Bandbreite von 10 kHz aufweist.

## Claims

**1.** Method for estimating the usability of a sub-carrier of a BPL (Broadband Power Line) signal, particularly for avoiding the mutual interference of the BPL-signal and a further signal, with the BPL-signal comprising a plurality of sub-carriers and with one symbol each able to be transmitted in the sub-carriers, comprising the steps:

extracting a received value $y[k]$ from a sub-carrier of a received BPL-signal,
equalizing the received value $y[k]$ using an estimated transfer function $\hat{H}$ of the transmission channel,
deciding for a symbol $\hat{d}[k]$, which is coded in the received value $y[k]$,
distorting the symbol $\hat{d}[k]$ with the estimated transfer function $\hat{H}$ of the transmission channel,
forming a difference between the received value $y[k]$ and the processed signal $\hat{d}[k]\cdot\hat{H}$, and
deciding about the usability of the sub-carrier based on the difference $y[k]-\hat{d}[k]\cdot\hat{H}$.

**2.** Method according to claim 1, **characterized in that** the decision about the usability of the sub-carrier is based on the expected value of the squared value of the difference $y[k] - \hat{d}[k]\cdot\hat{H}$, with the expected value being formed using a plurality of differences, preferably at least 100, particularly preferred at least 1000.

**3.** Method according to claim 1 or 2, **characterized in that** the decision about the usability of the sub-carrier is formed using a threshold decider, wherein when a predetermined threshold is fallen short of, the sub-carrier is used and upon crossing the threshold the sub-carrier is omitted.

**4.** Method according to one of claims 1 to 3, **characterized in that** the evaluation of the sub-carrier is performed periodically, preferably with a period term of less than 15 s.

**5.** Method according to one of claims 1 to 4, **characterized in that** in the step of deciding positively for a symbol the equalized received value is decoded using a signal decoder and the decoded symbol is assigned via a symbol mapper to a symbol $\hat{d}[k]$, which most probably has been transmitted.

**6.** Method according to claim 5, **characterized in that** an error correction is performed between the signal decoder and the symbol mapper, preferably a forward error correction.

**7.** Method according to one of claims 1 to 6, **characterized in that** a block error detection is performed and that only those frames of the BPL-signal, which have been correctly received, are included in the evaluation.

**8.** Method according to one of claims 1 to 7, **characterized in that** the further signal comprises a transmitted signal, particularly a radio signal or an amateur radio signal.

**9.** Method according to claim 8, **characterized in that** the sub-carriers to be evaluated are pre-selected based on a predetermined list of frequencies potentially subject to protection.

**10.** Method according to one of claims 1 to 9, **characterized in that** the result of the evaluation is used to determine notching parameters for a BPL-signal, wherein frequencies in the BPL-signal are omitted by the notching, wherein a sub-carrier is evaluated, and wherein based on the evaluation of the sub-carrier a decision is made for or against omitting of the sub-carrier.

**11.** Method according to claim 10, **characterized in that** a notch filter is used to omit the sub-carrier, wherein the centre frequency of the notch filter being equivalent to the centre frequency of the sub-carrier and wherein the notch filter preferably comprises a bandwidth of a multiple of 5 kHz, particularly preferred a bandwidth of 10 kHz.

**Revendications**

1.  Procédé permettant d'évaluer l'exploitabilité d'une sous-porteuse d'un signal CPL (sur courant porteur à large spectre), en particulier afin d'éviter une influence réciproque du signal CPL et d'un autre signal, étant entendu que le signal CPL présente une pluralité de sous-porteuses et qu'un symbole peut être transmis dans chacune des sous-porteuses, comprenant les étapes suivantes :

    - extraction d'une valeur de réception $y[k]$ d'une sous-porteuse d'un signal CPL reçu ;
    - égalisation de la valeur de réception $y[k]$ en utilisant une fonction de transmission estimée $\hat{H}$ du canal de transmission ;
    - décision d'un symbole $\hat{d}[k]$ qui est codé dans la valeur de réception $y[k]$ ;
    - égalisation du symbole $\hat{d}[k]$ avec la fonction de transmission estimée $\hat{H}$ du canal de transmission ;
    - formation d'une différence entre la valeur de réception $y[k]$ et le signal préparé $\hat{d}[k] \cdot \hat{H}$ ; et
    - décision sur l'exploitabilité de la sous-porteuse sur la base de la différence $y[k] - \hat{d}[k] \cdot \hat{H}$.

2.  Procédé selon la revendication 1, **caractérisé en ce qu'**une décision est prise sur l'exploitabilité de la sous-porteuse sur la base de la valeur probable du carré de la valeur de la différence $y[k] - \hat{d}[k] \cdot \hat{H}$, étant entendu que la valeur probable est formée par le biais d'une pluralité de différences, de préférence au moins 100, et de façon particulièrement préférée au moins 1 000.

3.  Procédé selon la revendication 1 ou 2, **caractérisé en ce que** la décision sur l'exploitabilité de la sous-porteuse est formée au moyen d'un dispositif de décision à valeur de seuil, étant entendu que si une valeur de seuil prédéterminée n'est pas atteinte, la sous-porteuse est exploitée, et si la valeur de seuil est dépassée, la sous-porteuse est écartée.

4.  Procédé selon l'une des revendications 1 à 3, **caractérisé en ce que** l'évaluation de la sous-porteuse est réalisée périodiquement, de préférence à une période de moins de 15 s.

5.  Procédé selon l'une des revendications 1 à 4, **caractérisé en ce que** dans l'étape de décision d'un symbole, le signal de réception égalisé est décodé au moyen d'un décodeur de signaux et le symbole décodé est attribué, au moyen d'un conditionneur de symboles, à un symbole $\hat{d}[k]$ qui a le plus probablement été envoyé.

6.  Procédé selon la revendication 5, **caractérisé en ce qu'**entre le décodeur de signaux et le conditionneur de symboles, une correction d'erreurs, de préférence une correction d'erreurs d'avance, est réalisée.

7.  Procédé selon l'une des revendications 1 à 6, **caractérisé en ce qu'**une détection d'erreurs sur les blocs est réalisée et **en ce que** seuls les cadres du signal CPL qui ont été reçus correctement sont intégrés dans l'évaluation.

8.  Procédé selon l'une des revendications 1 à 7, **caractérisé en ce que** l'autre signal comprend un signal radioélectrique, en particulier un signal radio ou un signal de radioamateur.

9.  Procédé selon la revendication 8, **caractérisé en ce que** les sous-porteuses qui doivent être évaluées sont présélectionnées à l'aide d'une liste prédéterminée de fréquences qui doivent potentiellement être protégées.

10.  Procédé selon l'une des revendications 1 à 9, **caractérisé en ce que** le résultat de l'évaluation est utilisé pour la détermination de paramètres de notching pour un signal CPL, étant entendu qu'au moyen du notching, des fréquences sont éliminées du signal CPL, étant entendu qu'une évaluation d'une sous-porteuse est réalisée et étant entendu que sur la base de l'évaluation de la sous-porteuse, une décision est prise pour ou contre un écartement de la sous-porteuse.

11.  Procédé selon la revendication 10, **caractérisé en ce qu'**un filtre de notching est utilisé aux fins de l'écartement de la sous-porteuse, étant entendu que la fréquence moyenne du filtre de notching correspond à la fréquence moyenne de la sous-porteuse et étant entendu que le filtre de notching présente de préférence une largeur de spectre d'un multiple de 5 kHz, et de façon particulièrement préférée une largeur de spectre de 10 kHz.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 60312839 T2